(19) Europäisches Patentamt
European Patent Office
Office européen des brevets

(11) **EP 2 374 116 B1**

(12) **EUROPEAN PATENT SPECIFICATION**

(45) Date of publication and mention
of the grant of the patent:
**22.05.2013 Bulletin 2013/21**

(21) Application number: **09741050.0**

(22) Date of filing: **13.10.2009**

(51) Int Cl.:
*G08B 13/24* (2006.01)    *G06K 19/077* (2006.01)

(86) International application number:
**PCT/US2009/005590**

(87) International publication number:
**WO 2010/068233 (17.06.2010 Gazette 2010/24)**

(54) **METAL OXIDE SEMICONDUCTOR DEVICE FOR USE IN UHF ELECTRONIC ARTICLE SURVEILLANCE SYSTEMS**

METALLOXID-HALBLEITERANORDNUNG ZUR VERWENDUNG IN ELEKTRONISCHEN UHF-ARTIKELSICHERUNGSSYSTEMEN

DISPOSITIF MÉTAL-OXYDE-SEMI-CONDUCTEUR À USAGE DANS DES SYSTÈMES DE SURVEILLANCE ÉLECTRONIQUE D'ARTICLE UHF

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.12.2008   US 331604**

(43) Date of publication of application:
**12.10.2011   Bulletin 2011/41**

(73) Proprietor: **Sensormatic Electronics, LLC
Boca Raton, FL 33486 (US)**

(72) Inventors:
• **LIAN, Ming-ren
Boca Raton
FL 33428 (US)**

• **COPELAND, Richard, Loyd
Lake Worth
FL 33463 (US)**

(74) Representative: **Hafner, Dieter et al
Hafner & Partner
Patent-/Rechtsanwaltskanzlei
Schleiermacherstrasse 25
90491 Nürnberg (DE)**

(56) References cited:
**FR-A1- 2 669 756        US-A- 5 257 009
US-A1- 2005 179 551    US-A1- 2005 183 817**

**Description**

FIELD OF THE INVENTION

The present invention relates generally to article interrogation systems and more specifically to a method and system for deactivating a tag in an Ultra High Frequency ("UHF") interrogation system without the need to physically contact the tag with a deactivation device.

BACKGROUND OF THE INVENTION

Mixing labels or mixing tags are used in Ultra High Frequency ("UHF") electronic article surveillance ("EAS") interrogation systems and are based on a frequency mixing principle. Typically, mixing tags include a diode attached to a dipole antenna. The tag is tuned at a specific microwave frequency ($f_{uhf}$), such as for example 915 MHz. The frequency range can be chosen from hundreds of Megahertz up to several Gigahertz by adjusting the antenna's dipole length and the diode's junction capacitance. The lower the operating microwave frequency, the longer the dipole length is required, and the larger the capacitance.

However, there are inherent limitations with deactivation devices when having to deactivate tags having diodes. For example, U.S. Patent Nos. 4,318,090 and 4,574,274 provide UHF mixing tags that use diode non-linear elements and means for direct contact or non-direct contact but with limited range. The breakdown characteristics of the diode requires that a substantial current be driven through diode in order to achieve deactivation, thus resulting in the direct contact with the tag in order to supply sufficient electrical energy to the diode to cause it to be destroyed, thus deactivating the tag. This results in an impractical deactivation system since it is not always possible or economically feasible to be limited to this type of "contact" deactivation. Thus, tag designs of this type are ineffective in situations where deactivation of the tag takes place from a distance, i.e., where the deactivation device is not in contact with the tag. Other prior art deactivation systems (such as the system disclosed in U.S. Patent No. 5,608,379) have attempted to avoid this problem by adding switches and other hardware devices to the deactivation system. This proves to be costly and cumbersome and results in relatively low deactivation distances for a considerably large magnetic field source.

US 2005/0179551 A1 discloses a frequency divider with variable capacitance that is used in an electronic article surveillance system. The EAS tag includes an antenna circuit and a MOS device as a non-linear capacitance coupled to the antenna circuit.

US 5,257,009 shows an EAS tag with voltage dependent capacitance. Therefore, the circuit means of the EAS tag can be selectively enabled and disabled from being able to reradiate a tag signal.

US 2005/0183817 A1 describes a method of fabricating a tag where the antenna circuit includes a dipole antenna.

FR 2 669 756 A1 is related to a system for recording and invalidating the identification of a medical product containing a destruction device to destroy the reference code of the product.

Neither of the aforementioned attempted solutions solves the problem of how to effectively deactivate EAS tags at a substantial distance without the need for the deactivation device to be in direct contact with the EAS tag and without the need to provide additional deactivation elements to the EAS tag. The inherent characteristics of diodes with their predictable non-linear behavior render EAS deactivation systems that utilize these types of EAS tags ineffective when it comes to deactivating tags from a distance.

Therefore, what is needed is a new EAS tag using a non-linear element that exhibits very low level breakdown characteristics so that reliable deactivation at a considerable distance is achieved.

SUMMARY OF THE INVENTION

The present invention advantageously provides a system, method and apparatus for facilitating the deactivation of tags in UHF interrogation systems by incorporating a nonlinear MOS device, such as a MOS capacitor, in the tag. In one aspect of the invention, an electronic article surveillance ("EAS") tag is provided, where the tag includes an antenna circuit, and a non-linear component electrically coupled to the antenna circuit. The nonlinear component exhibits non-linear capacitance with respect to voltage below a breakdown voltage threshold and exhibits a linear capacitance with respect to voltage above the breakdown voltage threshold. The non-linear component is a metal-oxide-semiconductor device, application of a predetermined voltage to the MOS device results in destruction of the MOS device, thereby rendering the EAS tag undetectable by an EAS interrogation system and the MOS device includes an insulator layer, wherein application of the predetermined voltage to the MOS device results in breakdown of the insulation layer, the tag further comprising a step-up circuit electrically coupled to the MOS device, the step-up circuit increasing the voltage applied to the MOS device.

In another aspect, an electronic article surveillance ("EAS") tag deactivation system is provided and includes an EAS tag, where the tag includes an antenna circuit, and a non-linear component electrically coupled to the antenna circuit. The non-linear component exhibits a non-linear capacitance with respect to voltage below a breakdown voltage threshold and exhibits a linear capacitance with respect to voltage above the breakdown voltage threshold. The system further includes a deactivation device adapted to deactivate the EAS tag without making contact with it, the tag further comprising a step-up circuit electrically coupled to the MOS device, wherein the non-linear component is a metal- oxide-semiconductor ("MOS") device, wherein the deactivation device applies a predetermined voltage across the MOS resulting in destruction of the MOS device, thereby rendering the EAS tag undetectable by an EAS interrogation system and wherein the MOS device includes an insulator layer, wherein application of the predetermined voltage to the MOS device results in breakdown of the insulation layer, the tag further comprising a step-up circuit electrically coupled to the MOS device, the step-up circuit increasing the voltage applied to the MOS device. In yet another aspect of the invention, a method of deactivating an electronic article surveillance ("EAS") tag is provided. The method includes providing an EAS tag having an antenna circuit and a non-linear component electrically coupled to the antenna circuit, where the non-linear component exhibits a non-linear capacitance with respect to voltage below a breakdown voltage threshold and exhibits a linear capacitance with respect to voltage above the breakdown voltage threshold. The method further includes inducing a voltage across the nonlinear component, where the induced voltage is greater than the breakdown threshold in order to break down the non-linear component, wherein the non-linear component is a metal-oxide-semiconductor ("MOS") device, application of a predetermined voltage to the MOS device results in destruction of the MOS device, thereby rendering the EAS tag undetectable by an EAS interrogation system and the MOS device includes an insulator layer, wherein application of the predetermined voltage to the MOS device results in breakdown of the insulation layer, the tag further comprising a step-up circuit electrically coupled to the MOS device, the step-up circuit increasing the voltage applied to the MOS device.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:

FIG. 1 is a layout of a UHF mixing tag illustrating a prior art tag design utilizing a diode and a dipole antenna;
FIG. 2 is a diagram of a UHF mixing EAS system that incorporates the principles of the present invention;

FIG. 3 is a diagram of an EAS tag design utilizing a non-linear MOS element and dipole antenna constructed in accordance with the principles of the present invention;
FIG. 4 is a side view a non-linear MOS capacitor used with an EAS tag and constructed in accordance with the principles of the present invention;
FIG. 5 is a graph illustrating the non-linear capacitance characteristics of a p-type MOS capacitor constructed in accordance with the principles of the present invention; and
FIG. 6 is a circuit diagram used to enhance the deactivation characteristics of the EAS tag constructed in accordance with the principles of the present invention.

DETAILED DESCRIPTION OF THE INVENTION

Before describing in detail exemplary embodiments that are in accordance with the present invention, it is noted that the embodiments reside primarily in combinations of apparatus components and processing steps related to implementing a system, device and method for facilitating the deactivation of EAS tags in a proximity deactivation environment by including within the tag, a nonlinear MOS device that is suitable for breakdown with a low voltage. Accordingly, the system and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

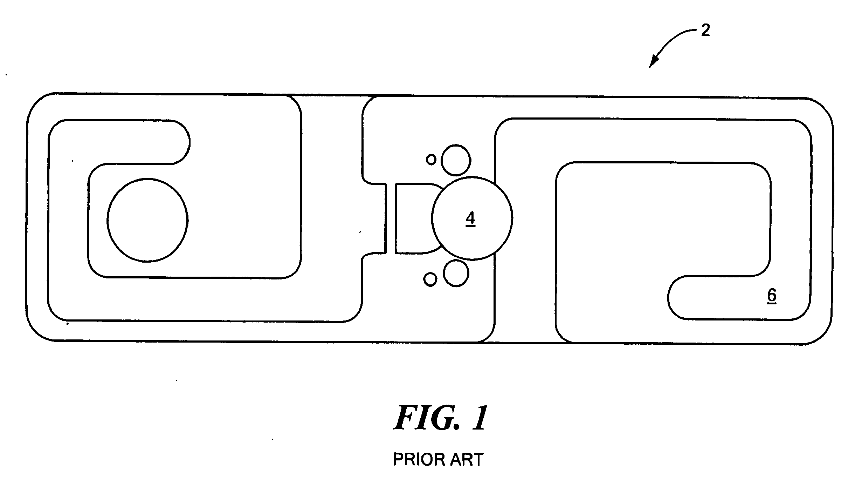

FIG. 1 illustrates a prior art design of a mixing marker 2 or mixing tag often used in electronic article surveillance ("EAS") systems. Mixing markers of this type are inherently deficient in tag deactivation systems due to the amount of energy needed to destroy the diode, which is typically designed to be robust and rectify and control voltages. The nonlinearity of the intrinsic capacitance and relatively low voltage breakdown characteristics of the MOS capacitor are more desirable than the diode in this aspect. In FIG. 1, the diode 4 appears between two parts of the antenna 6. Tag designs of this type are ineffective in situations where deactivation of the tag takes place from a distance, i.e., where the deactivation device is not in contact with the tag.

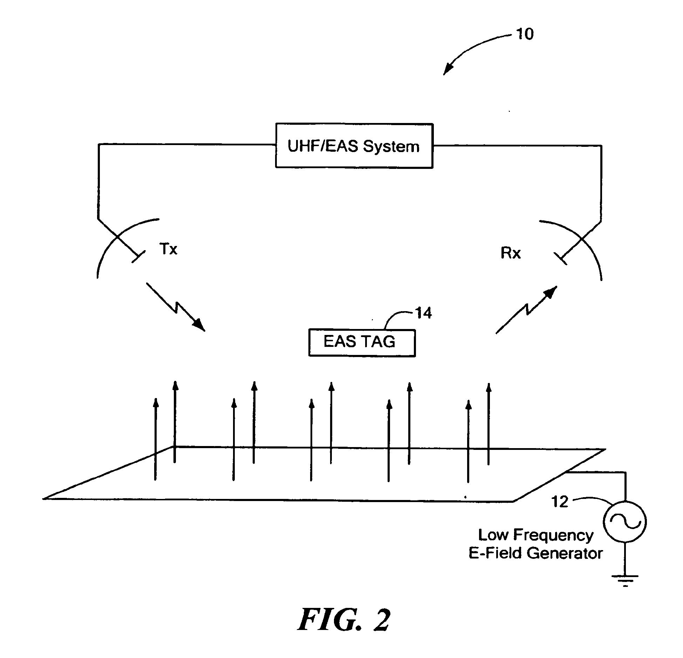

Referring now to the drawing figures in which like reference designators refer to like elements there is shown in FIG. 2 an EAS interrogation system constructed in accordance with the principles of the present invention and designated generally as "10". FIG. 2 illustrates an Ultra High Frequency ("UHF") EAS system used in connection with the present invention. In this system, in addition to a UHF carrier electromagnetic field, a low frequency ($f_{lf}$) field (such as an electric or magnetic field) is also required. Low frequency ("LF") E-field Generator 12 provides the low frequency energy to mixing tag 14. The UHF electromagnetic signal is used along with the LF modulation signal to provide the field sources 12 for the mixing tag 14. Tag 14 includes a non-linear element (discussed in greater detail below) and a dipole antenna. Since the tag's diode junction capacitance varies as a function of voltage, the tag 14 will generate a inter-modulated component ($f_{uhf} \pm f_{lf}$) once it is under the illumination of both UHF and low LF energies. Such an inter-modulated component is received and processed to determine the presence of an EAS device.

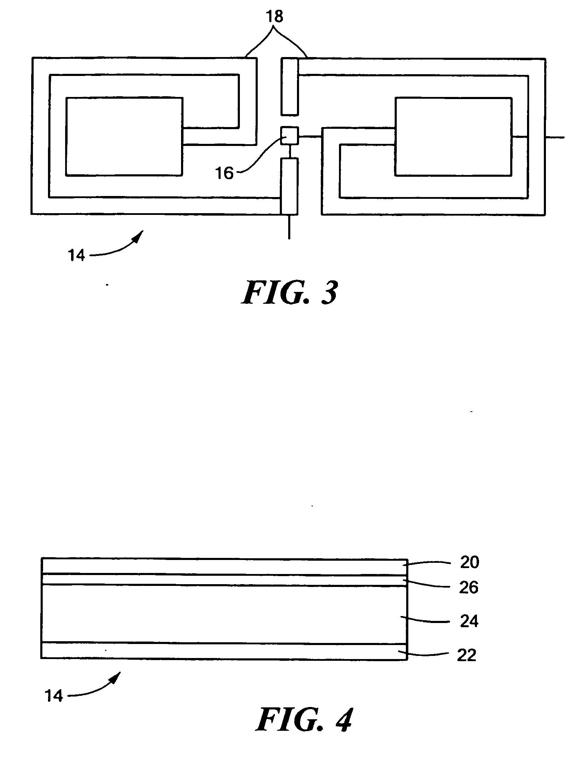

FIG. 3 illustrates the layout design of mixing tag 14 of the present invention. The present invention provides the capability of deactivating EAS tag 14 without the need for the EAS tag deactivator to be in contact with tag 14. As can be seen in FIG. 3, tag 14 includes a non-linear element such as a Metal Oxide Semiconductor ("MOS") device 16 with an inherent low breakdown voltage, and a dipole antenna 18. In one embodiment, MOS device 16 is situated between each side of dipole antenna 18 and is in electrical contact therewith. The low threshold breakdown voltage of MOS device 16 allows easier deactivation including remote deactivation and does not add additional deactivation elements to EAS tag 14. In addition, the inherent non-linearity of such a MOS device 16 can be higher than a conventional diode, thus providing improved detection performance.

The antenna 18 is tuned approximately to the UHF electromagnetic signal (e.g., 915 MHz). The LF modulation frequency may be, for example, 111 KHz. The LF electric field modulates the non-linear capacitance of the MOS device 16 and creates a series of mixing signals centered about the UHF signal with frequency periodicity of $f_1 \pm N*f_2$, where $f_1$ is the UHF signal frequency, $f_2$ is the LF modulation signal frequency, and N is the sideband number. The mixing signal level is a function of the UHF resonant field, the LF modulation field, the mixing tag antenna 18, and the non-linearity characteristics of the MOS device 16. The MOS device 16 characteristics that affect this mixing signal are discussed below. The detection system consists of UHF and modulation antennas along with electronics that provide the field sources and detection circuitry.

Thus, EAS tags having a non-linear diode element such as in the prior art are replaced by EAS tags of the present invention using MOS device 16. FIG. 4 illustrates the components of mixed EAS tag 14. The design depicted in FIG. 4 is one embodiment, and it is within the scope of the invention to modify this design such that it is suitable and compatible with the existing fabrication techniques. Tag 14 includes a top electrode layer 20, a bottom electrode layer 22, a semiconductor region 24 and an insulation layer 26. Due to the insulated layer 26 within the structure, the device behaves like a capacitor.

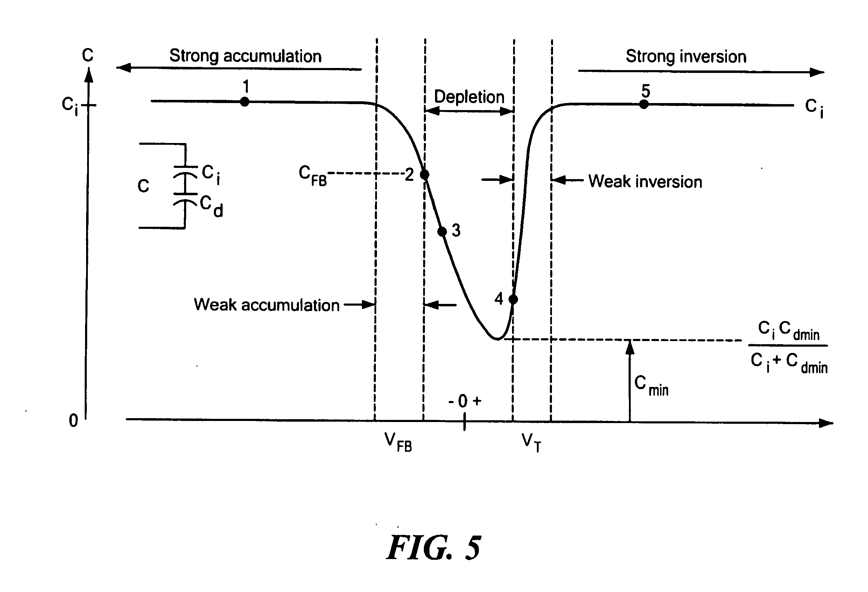

FIG. 5 shows the C-V (capacitor vs. voltage) characteristics of a device 14 constructed in accordance with the principles of the present invention. As the terminal voltage (also known as gate voltage $V_G$, in this case) increases, an additional space charge region is created. This is equivalent of a second capacitor in series connection with the basic intrinsic capacitor ($C_i$). The maximum junction capacitor for this device is $C_i$, which assumes the values of a capacitor with the thin insulator 26 between the electrodes and can be expressed as below where $\varepsilon$, A, d represent dielectric constant of the insulator, area and the thickness of the capacitor where

$$C = \varepsilon \frac{A}{d}.$$

. With a p-type semiconductor, as the gate voltage increases from negative to positive voltage the holes are pushed away from insulator/semiconductor interface, leaving a bulk of immobile negative ions. This effectively increases the gap, and therefore the total net capacitance is reduced. The capacitance eventually reaches a minimum. Additionally increasing the voltage will not increase the size of the depletion region. A further increase in gate voltage will create an inversion, where a large population of electrons will be attracted to the interface, as a result, the effective capacitance will revert back to the $C_i$ value. This however, will only take place at a low frequency (<100 Hz) region. In a typical high frequency condition, the net capacitance will be measured to be $C_{min}$, as indicated in FIG. 5 since the charge can not respond quickly with the AC field, which is related to the generation-recombinaton rate of the minority carrier in the inversion layer.

The CV characteristic of MOS device 16 depends on the doping concentration of the semiconductor, thickness of the insulator 26, and the types of materials used for electrodes 20 and 22. The design of the present invention can be altered such that the degree of non-linearity can exceed that of a diode (as used in the prior art) thus further enhancing the UHF EAS system performance. Further, MOS device 16 can be deactivated at distances from the deactivator beyond those EAS devices that use diodes. This arrangement is advantageous when using disposable EAS tags 14. Contrary to a diode, the MOS device 16 can be destroyed by applying a high enough voltage ($V_G$) across the electrodes. As a result, the EAS function can be effectively eliminated and/or altered resulting in the ceased production of the mixing signal. i.e., deactivation occurs. With the relatively low breakdown voltage of MOS device 16 it is possible to create a deactivation distance without adding additional features to the non-linear element (i.e., MOS device 16) of EAS mixing tag 14.

To facilitate the ease of deactivation, the breakdown voltage of MOS device 16 of EAS tag 14 can be further minimized. This can be achieved by, for example, reducing the thickness of insulation/dielectric layer 26. With a thinner layer, a high E-field can be generated to induce breakdown. Alternately, it is possible to choose different kinds of insulators having lower breakdown voltages. In yet another embodiment, impurity or defect centers may be included during the deposition of the dielectric layers to encourage the breakdown.

Thus, MOS device 16 has a built-in breakdown voltage characteristic that determines the deactivation characteristics in mixing tag 14. A deactivator device provides an E-field source within regulatory limits at a determined operating frequency. The E-field couples to the mixing tag 14 to provide the necessary breakdown of the thin oxide layer of the MOS device 16. Below this breakdown threshold, MOS device 16 operates as a non-linear capacitor. However, after breakdown is achieved, MOS device 16 operates as a linear capacitor with a somewhat lower capacitance value. Absence of the non-linearity characteristic renders mixing tag 14 undetectable in an EAS mixing system.

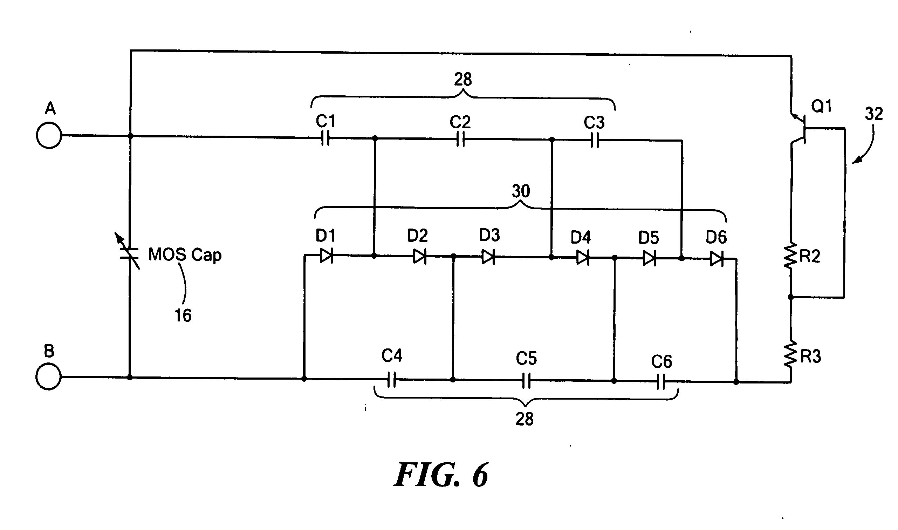

FIG. 6 illustrates the present invention. A step-up voltage circuit is added in order to amplify the deactivation field-induced voltage across the MOS device 16 in order to enhance deactivation performance. In this scenario, certain electronic components can be added along with the MOS device 16. As previously described, an antenna, such as a dipole or loop antenna, is attached to points A and B to connect with the nonlinear MOS capacitor device 16. In the exemplary embodiment of FIG. 6, a Cockroft Walton voltage multiplier is used to raise the DC voltage up to several fold of $V_{in}$ peak voltage. It is noted that other types of step-up circuits that serve to increase the voltage across MOS device 16 may also be used. In this example, a ladder network of capacitors 28 (C1 - C6) and diodes 30 (D 1 - D6) serve to amplify the voltage across MOS device 16. The voltage output of the final stage is then fed back to the MOS device 16 through a MOSFET switch 32. As the voltage increased to a predetermined amount, the MOSFET switch 32 is switched on, and a high voltage is available to the destruction of the MOS device 16. Other circuits may be incorporated in order to improve deactivation performance by stepping up the voltage across MOS device 16.

Thus, antenna 18 is electrically connected to points A and B, and MOS device 16 can include the circuit depicted in FIG. 6, which enhances the deactivation performance by stepping up the applied voltage when a sufficient deactivation E field is applied to the antenna 18. Under normal detection mode, the step-up voltage circuit appears as an open circuit as the passive diode and transistor devices are below the required range of turn-on needed to activate the step-up voltage circuit.

The present invention advantageously provides and defines a device, system and method used to facilitate the deactivation of EAS tags in a proximity deactivation environment by including within the tag, a nonlinear MOS device that is suitable for breakdown with a low voltage.

In addition, unless mention was made above to the contrary, it should be noted that all of the accompanying drawings are not to scale. Significantly, this invention can be embodied in other specific forms without departing from the scope of the invention as defined by the following claims, and accordingly, reference should be had to the following claims, rather than to the foregoing specification, as indicating the scope of the invention.

**Claims**

1. An electronic article surveillance ("EAS") tag (14) comprising:

   an antenna circuit; and
   a non-linear component electrically coupled to the antenna circuit, the non-linear component exhibiting a non-linear capacitance with respect to voltage below a breakdown voltage threshold and exhibiting a linear capacitance with respect to voltage above the breakdown voltage threshold, wherein the non-linear component is a metal-oxide-semiconductor ("MOS") device (16), application of a predetermined voltage to the MOS device results in destruction of the MOS device, thereby rendering the EAS tag (14) undetectable by an EAS interrogation system (10) and the MOS device (16) includes an insulator layer (26), wherein application of the predetermined voltage to the MOS device (16) results in breakdown of the insulation layer (26) **characterized by**
   comprising a step-up circuit electrically coupled to the MOS device (16), the step-up circuit increasing the voltage applied to the MOS device (16).

2. The electronic article surveillance ("EAS") tag (14) of Claim 1, wherein the antenna circuit includes a dipole antenna (18).

3. The electronic article surveillance ("EAS") tag of Claim 1, wherein the antenna circuit includes a first portion and a second portion, and the non-linear component being located between the first portion of the antenna circuit and the second portion of the antenna circuit

4. The electronic article surveillance ("EAS") tag (14) of Claim 1, wherein the step-up circuit includes a switch that is activated at a predetermined voltage, making the increased voltage available to the MOS device (16).

5. The electronic article surveillance ("EAS") tag (14) of Claim 1, wherein the EAS tag (14) is a mixing tag modulated by a combination of high frequency and low frequency signals.

6. An electronic article surveillance ("EAS") tag deactivation system comprising:

an EAS tag (14), the tag (14) comprising:

an antenna circuit; and
a non-linear component electrically coupled to the antenna circuit, the nonlinear component exhibiting a non-linear capacitance with respect to voltage below a breakdown voltage threshold and exhibiting a linear capacitance with respect to voltage above the breakdown voltage threshold; and

a deactivation device adapted to deactivate the EAS tag (14) without making contact with it, wherein the non-linear component is a metal-oxide-semiconductor ("MOS") device (16), wherein the deactivation device applies a predetermined voltage across the MOS (16) resulting in destruction of the MOS device (16), thereby rendering the EAS tag (14) undetectable by an EAS interrogation system (10) and wherein the MOS device (16) includes an insulator layer (26), wherein application of the predetermined voltage to the MOS device (16) results in breakdown of the insulation layer (26)
**characterized by**
comprising a step-up circuit electrically coupled to the MOS device (16), the step-up circuit increasing the voltage applied to the MOS device (16).

7. The system of Claim 6, wherein the antenna circuit includes a dipole antenna (18).

8. The system of Claim 6, wherein the antenna circuit includes a first portion and a second portion, and the non-linear component being located between the first portion of the antenna circuit and the second portion of the antenna circuit.

9. The system of Claim 6, further comprising a step-up circuit electrically coupled to the MOS device (16), the step-up circuit increasing the voltage applied the MOS device (16).

10. The system of Claim 9, wherein the step-up circuit includes a switch that is activated at a predetermined voltage, making the increased voltage available to the MOS device (16).

11. The system of Claim 6, wherein the EAS tag (14) is a mixing tag modulated by a combination of high frequency and low frequency signals.

12. A method of deactivating an electronic article surveillance ("EAS") tag (14), the method comprising:

providing an EAS tag (14) having an antenna circuit and a non-linear component electrically coupled to the antenna circuit, the non-linear component exhibiting a nonlinear capacitance with respect to voltage below a breakdown voltage threshold and exhibiting a linear capacitance with respect to voltage above the breakdown voltage threshold; and
inducing a voltage across the non-linear component, the induced voltage being greater than the breakdown threshold in order to breakdown the non-linear component, wherein the non-linear component is a metal-oxide-semiconductor ("MOS") device (16), application of a predetermined voltage to the MOS device (16) results in destruction of the MOS device (16), thereby rendering the EAS tag (14) undetectable by an EAS interrogation system (10) and the MOS device (16) includes an insulator layer (26), wherein application of the predetermined voltage to the MOS (16) device results in breakdown of the insulation layer (26)
**characterized by**
comprising a step-up circuit electrically coupled to the MOS device (16), the step-up circuit increasing the voltage applied to the MOS device (16).

**Patentansprüche**

1. Elektronisches Artikelsicherungsetikett ("EAS"-Etikett)(14), das Folgendes umfasst:

eine Antennenschaltung; und
eine nichtlineare Komponente, die an die Antennenschaltung elektrisch gekoppelt ist, wobei die nichtlineare Komponente eine nichtlineare Kapazität in Bezug auf eine Spannung unter einem Durchschlagsspannungsgrenzwert aufweist und eine lineare Kapazität in Bezug auf eine Spannung über dem Durchschlagsspannungsgrenzwert aufweist, wobei die nichtlineare Komponente eine Metall-Oxid-Halbleiter-Vorrichtung ("MOS"-Vorrichtung) (16) ist, das Anlegen einer vorgegebenen Spannung an die MOS-Vorrichtung zu einer Zerstörung der MOS-Vorrichtung führt, wodurch das EAS-Etikett (14) durch ein EAS-Abfragesystem (10) nicht nachweisbar wird, und die MOS-Vorrichtung (16) eine Isolierschicht (26) enthält, wobei das Anlegen der vorgegebenen Spannung an die MOS-Vorrichtung (16) zu einem Durchbruch der Isolierschicht (26) führt,
**gekennzeichnet durch**

eine Hochstufungsschaltung, die an die MOS-Vorrichtung (16) elektrisch gekoppelt ist, wobei die Hochstufungsschaltung die an die MOS-Vorrichtung (16) angelegte Spannung erhöht.

**2.** Elektronisches Artikelsicherungsetikett ("EAS"-Etikett) (14) nach Anspruch 1, wobei die Antennenschaltung eine Dipolantenne (18) enthält.

**3.** Elektronisches Artikelsicherungsetikett ("EAS"-Etikett) nach Anspruch 1, wobei die Antennenschaltung einen ersten Abschnitt und einen zweiten Abschnitt enthält und wobei sich die nichtlineare Komponente zwischen dem ersten Abschnitt der Antennenschaltung und dem zweiten Abschnitt der Antennenschaltung befindet.

**4.** Elektronisches Artikelsicherungsetikett ("EAS"-Etikett) (14) nach Anspruch 1, wobei die Hochstufungsschaltung einen Schalter enthält, der bei einer vorgegebenen Spannung ausgelöst wird, wodurch die erhöhte Spannung für die MOS-Vorrichtung (16) verfügbar wird.

**5.** Elektronisches Artikelsicherungsetikett ("EAS"-Etikett) (14) nach Anspruch 1, wobei das EAS-Etikett (14) ein durch eine Kombination von Hochfrequenz- und Niedrigfrequenzsignalen moduliertes Mischetikett ist.

**6.** Elektronisches Artikelsicherungsetikett-Deaktivierungssystem ("EAS"-Etikett-Deaktivierungssystem), das Folgendes umfasst:

ein EAS-Etikett (14), wobei das Etikett (14) Folgendes umfasst:

eine Antennenschaltung; und eine nichtlineare Komponente, die an die Antennenschaltung elektrisch gekoppelt ist, wobei die nichtlineare Komponente eine nichtlineare Kapazität in Bezug auf eine Spannung unter einem Durchschlagsspannungsgrenzwert aufweist und eine lineare Kapazität in Bezug auf eine Spannung über dem Durchschlagsspannungsgrenzwert aufweist; und

eine Deaktivierungsvorrichtung, die ausgelegt ist, das EAS-Etikett (14) zu deaktivieren, ohne Kontakt mit ihm herzustellen, wobei die nichtlineare Komponente eine Metall-Oxid-Halbleiter-Vorrichtung ("MOS"-Vorrichtung) (16) ist, wobei die Deaktivierungsvorrichtung eine vorgegebene Spannung über den MOS (16) anlegt, die zu einer Zerstörung der MOS-Vorrichtung (16) führt, wodurch das EAS-Etikett (14) durch ein EAS-Abfragesystem (10) nicht nachweisbar wird, und wobei die MOS-Vorrichtung (16) eine Isolierschicht (26) enthält, wobei das Anlegen der vorgegebenen Spannung an die MOS-Vorrichtung (16) zu einem Durchbruch der Isolierschicht (26) führt,

**gekennzeichnet durch**
eine Hochstufungsschaltung, die an die MOS-Vorrichtung (16) elektrisch gekoppelt ist, wobei die Hochstufungsschaltung die an die MOS-Vorrichtung (16) angelegte Spannung erhöht.

**7.** System nach Anspruch 6, wobei die Antennenschaltung eine Dipolantenne (18) enthält.

**8.** System nach Anspruch 6, wobei die Antennenschaltung einen ersten Abschnitt und einen zweiten Abschnitt enthält und wobei sich die nichtlineare Komponente zwischen dem ersten Abschnitt der Antennenschaltung und dem zweiten Abschnitt der Antennenschaltung befindet.

**9.** System nach Anspruch 6, das ferner eine Hochstufungsschaltung umfasst, die an die MOS-Vorrichtung (16) elektrisch gekoppelt ist, wobei die Hochstufungsschaltung die an die MOS-Vorrichtung (16) angelegte Spannung erhöht.

**10.** System nach Anspruch 9, wobei die Hochstufungsschaltung einen Schalter enthält, der bei einer vorgegebenen Spannung ausgelöst wird, wodurch die erhöhte Spannung für die MOS-Vorrichtung (16) verfügbar wird.

**11.** System nach Anspruch 6, wobei das EAS-Etikett (14) ein durch eine Kombination von Hochfrequenz- und Niedrigfrequenzsignalen moduliertes Mischetikett ist.

**12.** Verfahren zum Deaktivieren eines elektronischen Artikelsicherungsetiketts ("EAS"-Etiketts) (14), wobei das Verfahren Folgendes umfasst:

Bereitstellen eines EAS-Etiketts (14) mit einer Antennenschaltung und einer nichtlinearen Komponente, die an die Antennenschaltung gekoppelt ist, wobei die nichtlineare Komponente eine nichtlineare Kapazität in Bezug auf eine Spannung unter einem Durchschlagsspannungsgrenzwert aufweist und eine lineare Kapazität in Bezug auf eine Spannung über dem Durchschlagsspannungsgrenzwert aufweist; und
Induzieren einer Spannung über der nichtlinearen Komponente, wobei die induzierte Spannung größer als der Durchbruchsgrenzwert ist, um die nichtlineare Komponente zu durchbrechen, wobei die nichtlineare Komponente eine Metall-Oxid-Halbleiter-Vorrichtung ("MOS"-Vorrichtung) (16) ist, das Anlegen der vorgegebenen Spannung an die MOS-Vorrichtung (16) zu einer Zerstörung der MOS-Vorrichtung (16) führt, wodurch das EAS-Etikett (14) durch ein EAS-Abfragesystem (10) nicht nachweisbar wird, und die MOS-Vorrichtung (16) eine Isolierschicht (26) enthält, wobei das Anlegen der vorgegebenen Spannung an die MOS-Vorrichtung (16) zu einem Durchbruch der Isolierschicht (26) führt,

**gekennzeichnet durch**

eine Hochstufungsschaltung, die an die MOS-Vorrichtung (16) elektrisch gekoppelt ist, wobei die die Hochstufungsschaltung die an die MOS-Vorrichtung (16) angelegte Spannung erhöht.

## Revendications

1. Étiquette de surveillance électronique d'article (EAS) (14) comprenant :

   un circuit d'antenne ; et
   un composant non linéaire couplé électriquement au circuit d'antenne, le composant non linéaire présentant une capacitance non linéaire par rapport à une tension au-dessous d'un seuil de tension de claquage et présentant une capacitance linéaire par rapport à une tension au-dessus du seuil de tension de claquage, où le composant non linéaire est un dispositif métal-oxyde-semi-conducteur (MOS) (16), l'application d'une tension prédéterminée au dispositif MOS conduit à une destruction du dispositif MOS, rendant ainsi l'étiquette EAS (14) indétectable par un système d'interrogation EAS (10) et le dispositif MOS (16) comprend une couche d'isolant (26), où l'application de la tension prédéterminée au dispositif MOS (16) conduit au claquage de la couche d'isolation (26),
   **caractérisé en ce qu'**il comprend
   un circuit élévateur électriquement couplé au dispositif MOS (16), le circuit élévateur augmentant la tension appliquée au dispositif MOS (16).

2. Étiquette de surveillance électronique d'article (EAS) (14) selon la revendication 1, dans laquelle le circuit d'antenne comprend une antenne dipôle (18).

3. Étiquette de surveillance électronique d'article (EAS) selon la revendication 1, dans laquelle le circuit d'antenne comprend une première partie et une seconde partie, et le composant non linéaire est situé entre la première partie du circuit d'antenne et la seconde partie du circuit d'antenne.

4. Étiquette de surveillance électronique d'article (EAS) (14) selon la revendication 1, dans laquelle le circuit élévateur comprend un commutateur qui est activé à une tension prédéterminée, rendant la tension augmentée disponible pour le dispositif MOS (16).

5. Étiquette de surveillance électronique d'article (EAS) (14) selon la revendication 1, où l'étiquette EAS (14) est une étiquette de mélange modulée par une combinaison de signaux haute fréquence et basse fréquence.

6. Système de désactivation d'étiquette de surveillance électronique d'article (EAS) comprenant une étiquette EAS (14), l'étiquette (14) comprenant :

   un circuit d'antenne ; et
   un composant non linéaire couplé électriquement au circuit d'antenne, le composant non linéaire présentant une capacitance non linéaire par rapport à une tension au-dessous d'un seuil de tension de claquage et présentant une capacitance linéaire par rapport à une tension au-dessus du seuil de tension de claquage ; et
   un dispositif de désactivation conçu pour désactive l'étiquette EAS (14) sans entrer en contact avec elle, où le composant non linéaire est un dispositif métal-oxyde-semi-conducteur (MOS) (16), où le dispositif de désactivation applique une tension prédéterminée à travers le dispositif MOS (16) conduisant à une destruction du dispositif MOS (16), rendant ainsi l'étiquette EAS (14) indétectable par un système d'interrogation EAS (10) et où le dispositif MOS (16) comprend une couche d'isolant (26), où l'application de la tension prédéterminée au dispositif MOS (16) conduit au claquage de la couche d'isolation (26),
   **caractérisé en ce qu'**il comprend
   un circuit élévateur électriquement couplé au dispositif MOS (16), le circuit élévateur augmentant la tension appliquée au dispositif MOS (16).

7. Système selon la revendication 6, dans lequel le circuit d'antenne comprend une antenne dipôle (18).

8. Système selon la revendication 6, dans lequel le circuit d'antenne comprend une première partie et une seconde partie, et le composant non linéaire est situé entre la première partie du circuit d'antenne et la seconde partie du circuit d'antenne.

9. Système selon la revendication 6, comprenant en outre un circuit élévateur électriquement couplé au dispositif MOS (16), le circuit élévateur augmentant la tension appliquée au dispositif MOS (16).

10. Système selon la revendication 9, dans lequel le circuit élévateur comprend un commutateur qui est activé à une tension prédéterminée, rendant la tension augmentée disponible pour le dispositif MOS (16).

11. Système selon la revendication 6, où l'étiquette EAS (14) est une étiquette de mélange modulée par une combinaison de signaux haute fréquence et basse fréquence.

12. Procédé de désactivation d'une étiquette de surveillance électronique d'article (EAS) (14), le procédé comprenant les étapes suivantes :

pourvoir une étiquette EAS (14) ayant un circuit d'antenne et un composant non linéaire couplé électriquement au circuit d'antenne, le composant non linéaire présentant une capacitance non linéaire par rapport à une tension au-dessous d'un seuil de tension de claquage et présentant une capacitance linéaire par rapport à une tension au-dessus du seuil de tension de claquage ; et

induire une tension à travers le composant non linéaire, la tension induite étant supérieure au seuil de claquage de manière à faire claquer le composant non linéaire, où le composant non linéaire est un dispositif métal-oxyde-semi-conducteur (MOS) (16), l'application d'une tension prédéterminée au dispositif MOS (16) conduisant à une destruction du dispositif MOS (16), rendant ainsi l'étiquette EAS (14) indétectable par un système d'interrogation EAS (10) et le dispositif MOS (16) comprend une couche d'isolant (26), où l'application de la tension prédéterminée au dispositif MOS (16) conduit au claquage de la couche d'isolation (26),
**caractérisé en ce qu'**il comprend
un circuit élévateur électriquement couplé au dispositif MOS (16), le circuit élévateur augmentant la tension appliquée au dispositif MOS (16).

*FIG. 1*

PRIOR ART

10

UHF/EAS System

Tx

Rx

14

EAS TAG

12

Low Frequency
E-Field Generator

*FIG. 2*

18

16

14

**FIG. 3**

20
26
24
22

14

**FIG. 4**

**FIG. 5**

FIG. 6

**REFERENCES CITED IN THE DESCRIPTION**

**Patent documents cited in the description**

- US 4318090 A
- US 4574274 A
- US 5608379 A
- US 20050179551 A1
- US 5257009 A
- US 20050183817 A1
- FR 2669756 A1